# EUROPEAN PATENT APPLICATION

(11) **EP 3 290 136 A1**
(43) Date of publication of application: **07.03.2018**
(21) Application number: 16020323.8
(22) Date of filing: 06.09.2016
(51) Int. Cl.: B22F 9/08, B22F 3/105

(54) **METHOD FOR THE PRODUCTION OF METALLIC POWDERS**

(71) Applicant: Linde Aktiengesellschaft, 80331 München (DE)
(72) Inventor: Cameron, Andrew, Matlock, DE4 5WA (GB)
(74) Representative: Gellner, Bernd

(57) **Abstract**

The invention relates to a method for the manufacturing of a metal powder by atomization with a gas or a liquid, wherein the molten metal is exposed to a controlled gas atmosphere at least containing a tensioactive species which is dissolved in the liquid metal and/or by adding of tensioactive microalloying elements to the liquid metal.

## Description

The invention pertains to a method for producing metal powders according to claim 1.

It is well known to produce metallic powders, in particular metallic powders for additive manufacturing, by so-called atomization technologies. A variety of atomization processes are used for metal powder production.

Additive manufacturing is a rapidly growing market for metallic powders. It essentially consists of the distribution of a thin layer of a metal powder from a reservoir followed by fusion/sintering of the powder using an energy source (e. g.. laser or electron beam). This is repeated building up the final product layer by layer. Powder size and morphology are critical characteristics that significantly impact the product quality. Generally speaking fine powders with a uniform particle size are preferred as this enables greater consistency as individual layers are deposited. Smaller particle sizes allow for thinner layers which determine the resolution of the component detail.

From W. J. Sames, F. A. List, S. Pannala, R. R. Dehoff and S. S. Babu (2016: The metallurgy and processing science and metal additive manufacturing, International Material Reviews) an overview over different methods of manufacturing can be derived. Starting in the late 1980's a large number of additive processes are now available and widely spread. The main differences between processes relate to the way layers are deposited to obtain parts and in the materials that are used.

, In additive manufacturing methods using metal powders several methods are common including electron beam melting (EBM), selective laser melting (SLM), selective heat sintering (SHS), selective laser sintering (SLS), and direct metal laser sintering (DMLS).

In selective laser sintering (SLS) a high power laser fuses a powder of metal (or ceramics or glass) into a mass that has a desired three-dimensional shape. In this case the laser selectively fuses powdered material by scanning cross-sections generated from a description of the part on the surface of a powder bed. After each cross-section is scanned, the powder bed is lowered by one layer thickness, a new layer of powder material is applied on top and the process is repeated until the part is completed. As the density of the finished part depends on the power of the laser and not the laser duration normally pulsed lasers are used. In these processes normally the powder material is preheated to just below the melting point of the powder to make it easier for the laser to heat the powder to a temperature above the melting point.

With selective laser sintering parts can be produced from a variety of metals including steel alloys, titanium, and alloy mixtures. In the method the physical process can be a full melting, a partial melting or a liquid phase sintering.

Direct metal laser sintering (DMLS) uses a laser which is directed to a bed of powdered metal wherein the material is melted or welded together to create the solid structure. A device for direct metal laser sintering uses a laser wherein a built chamber area uses a material dispensing platform and a built platform along with a recoater plate is used to move new powder over the built platform. This technology fuses metal powder into a solid part by melting and locally using the focus laser beam. Parts are built-up and additively layer-by-layer typical using layers which are for example about 20 µm thick. The used material is stainless steel, tool steel, cobalt chromium, inconel, aluminum and titanium.

One other method to consolidate metal powders into a solid mass is the so-called electron beam melting which uses an electron beam as a heat source. This is a technique similar to selective laser sintering (SLS). In contrast to sintering techniques electron beam melting as well as selective laser sintering fully melts the metal powder in the area where the beam impacts the powder layer.

Powder raw materials for these processes are produced using a variety of atomization processes. A description of the main methods is available from J. Davis, R. Bowerman and R. Trepleton (2015, 59 (3): Introduction to the additive manufacturing powder metallurgy supply chain; Johnson Matthey Technology Review, 243-256) common routes of powder production are known.

These routes include water atomization, gas atomization, plasma atomization the hydride-dehydride process and the TiRO^{™} process.

As it is mentioned in the article, all atomization processes begin with melting the feedstock alloy. The melting process has a number of variations but generally, when atomizing using water, the feedstock is first melted in a furnace before being transferred to a tundish (a crucible that regulates the flow rate of the melt into the atomizer). The liquid alloy enters the atomization chamber from above, in which it is free to fall through the chamber. Water jets are symmetrically positioned around the stream of liquid metal, atomizing and solidifying the particles. The final powder exits at the bottom of the chamber, where it is collected. Additional processing steps are then required to dry the powder. Metal powder produced in this way is typically highly irregular in morphology, which reduces both packing properties and flow properties. Water atomization is the main method for producing iron and steel powders and typically feeds into the press-and-sintered industries rather than the additive manufacturing industry.

Gas atomization processes mimic water atomization, with the differentiator being the use of gas instead of water during the processing. Air can be used as the atomizing medium, but it's more likely that an inert gas (nitrogen or argon) will be used to reduce the risk of oxidation and contamination of the metal. The process of melting the metal ingots can be the same as described for water atomization, however for powders produced for high end applications such as aerospace, the need to control interstitial elements has led to increased use of vacuum induction melting furnaces. In this case the molten stream of liquid enters the atomization chamber directly from the furnace rather than through a tundish. The stream of liquid metal is atomized by high pressure jets of gas. Due to the lower heat capacity of the gas in comparison with water the metal droplets have an increased solidification time which results in comparatively more spherical powder particles. Whilst it is not possible to have complete control over the particle size of atomized powder, the distribution can be influenced by varying the ratio of the gas to melt flow rate.

In plasma atomization it is possible to produce highly spherical particles. The feedstock used in the process can either be in wire form such as the method by AP & C Advanced Powders and Coatings Inc, Canada, or in powder form such as the method used by Tekna Plasma Systems Inc, Canada. The spool of wire or powder feedstock is fed into the atomization chamber where it is simultaneously melted and atomized by coaxial plasma torches and gas jets. Plasma rotating electrode process is a variation of plasma atomization whereby a bar of rotating feedstock is used instead of a wire feed. As the rotating bar enters the atomization chamber plasma torches melt the end of the bar, ejecting material from its surface. The metal solidifies before hitting the walls of the chamber.

The use of controlled atmospheres to improve atomization is primarily applicable to those processes (gas, water or centrifugal atomization), that melt a batch of metal in a furnace prior to atomization of a stream of liquid by impingement of a jet of another fluid (e.g. water or gas). In other processes, such as plasma atomization, electrode induction melting gas atomization the primary feedstock is a solid rod or wire and the molten state is transient. As it is apparent from the literature in additive manufacturing the size and characteristics of the metal powder are critical to the quality of the final product. This has resulted in a variety of atomization methods which are mentioned above, each having their characteristic advantages and disadvantages. There has been a great deal of effort to optimize the momentum, heat transfer characteristics and composition of gas jets. For example there have been studies on the impact of metal superheat and gas jet composition on the characteristics of powders. The results indicate a reduction in powder size with higher levels of melt superheat and that increasing the He content of the atomizing gas jet led to larger particle sizes, an effect ascribed to a rapid increase in melt viscosity linked to the cooling rate of the liquid droplets. Some models, such as the Lubanska equation, suggest that the effect of gas composition is also a function of gas jet pressure with Ar producing smaller particles than He at low gas jet pressure whereas the trend is reversed as jet pressure increases.

The control of particle size distributions is complicated, because it is influenced not only by gas composition and heat transfer characteristics but also by jet momentum, which in turn is the function of nozzle design, jet pressure and average molecular weight of the gas mix employed.

It is an object of the invention to lower the energy and/or momentum which will be required to generate a given surface to volume ratio during the atomization process making the atomization process more effective and leading to reduced particle sizes. This is achieved by a method for the manufacturing of metal powders according to claim 1.

According to the invention tensioactive species are introduced to the melt in order to lower the metal surface tension. In this way less energy or momentum will be required to generate a given surface to volume ratio during the atomization process. According to the invention the bulk liquid contained in the crucible/tundish or furnace is exposed to a controlled atmosphere containing the tensioactive species or microalloying elements which lower the surface tension are added to the liquid metal concentrations capable of reducing surface tension but having no or negligible impact on the physical or chemical properties of the metal.

Atomization of a liquid metal results in a huge increase in the surface to volume ratio of the metal being processed. This requires that energy be provided to generate the increased surface energy of the product phase. If the surface tension of the liquid is reduced by equilibration with a gas atmosphere capable of introducing tensioactive species and/or adding microalloying elements to the liquid metal it possible to lower the average particle size generated for given atomization conditions. Alternatively it is possible to retain a desired mean particle size but to do so by means of lower momentum or lower pressure gas (or water) jets.

The following examples are given:
Iron Alloys: It is well known that sulphur and oxygen are highly surface active in iron and consequently ferrous alloys are subject to dramatic reductions of surface tension at very low concentrations of these species even at the ppm level. One way of introducing the levels of oxygen or sulphur required to bring this about without influencing the physical properties of the final product would be to equilibrate the melt in the crucible or tundish with, for example, a CO:CO2:SO2 mixture ahead of atomization. The oxygen and sulphur potentials of such mixtures are very low.

Aluminum Alloys: Aluminum alloys are also subject to comparable effects. (Anson, Drew and Gruzelski, Met Trans B 1999, vol 30 pp 1027-1032) shows hydrogen lowers the surface tension of strontium modified A365 alloys from 0.844N/m to 0.8. That's about 5%. The authors ascribe that to formation of strontium hydride. The effect isn't huge but it provides confirmation that a combination of atmosphere control and micro-alloying could be an interesting approach for powder producers.

Other studies show that nitrogen lowers surface tension of Al at temps above 850 ascribed to formation of AIN. Small amounts of hydrogen added to the nitrogen are reported to enhance the effect relative to pure nitrogen. It should be understood that the potential of utilizing gas mixtures as a pre-treatment ahead of atomization is not limited to aluminum or iron alloys but is a general principle that can be applied to enhance or supplement the conventional approaches based on nozzle design and jet characteristics.

Depending on the atomization method therefore a normally used protective inert gas to shield a crucible or a tundish and/or melting furnace is mixed with the respective tension active species. Therefore, that gas can be mixed with oxygen and sulfur for example with CO, CO₂ SO₂ or mixtures of these gasses together with the inert gas or alone without an inert gas.

In aluminum alloys that would mean that the inert gas is mixed with hydrogen or nitrogen or to use a nitrogen protective gas alone.

Alternatively or in addition it is possible to micro-alloy the respective metal with microalloying elements which have been mentioned above or with group V and Vi elements which are known to be surface active in liquid metal solutions..

The alloying can take place according to the manufacturing route of the metal. This can be a metallurgical ladle or in the crucible or tundish before casting the metal into the atomization chamber.

## Claims

1. Method for the manufacturing of a metal powder by atomization with a gas or a liquid, wherein the molten metal is exposed to a controlled gas atmosphere at least containing a tensioactive species which is dissolved in the liquid metal and/or by adding of tensioactive microalloying elements to the liquid metal.

2. Method according to claim 1, **characterized in that** the average particle size generated by the atomization is reduced by the equilibration with a gas atmosphere containing the tensioactive species and/or to retain the desired mean particle size but lower the momentum or pressure of atomization media by introducing the tensioactive species by equilibration with a gas or adding of microalloying elements.

3. Method according to claim 1 or 2, **characterized in that** the microalloying elements are mixed with the metal in a melting furnace, in a crucible or in a tundish and/or equilibration of the molten metal with the tensioactive species containing gas atmosphere during the primary melting of the metal, the re-melting of the metal in a furnace prior to atomization or in a crucible or tundish prior to atomization.

4. Method according to claim 2 or 3, **characterized in that** the microalloying elements are elements having limited solubility in the parent metal especially if they are group V and/or VI elements.
